# EUROPEAN PATENT SPECIFICATION

(11) **EP 4 163 153 B1**
(45) Date of publication and mention of the grant of the patent: **04.06.2025**
(21) Application number: 21201421.1
(22) Date of filing: 07.10.2021
(51) Int. Cl.: B60Q 1/068

(54) **ADJUSTING SYSTEM FOR ADJUSTING A LIGHT MODULE OF A VEHICLE HEADLAMP**
EINSTELLSYSTEM ZUM EINSTELLEN EINES LICHTMODULS EINES FAHRZEUGSCHEINWERFERS
SYSTÈME DE RÉGLAGE POUR RÉGLER UN MODULE DE LUMIÈRE D'UN PHARE DE VÉHICULE

(43) Date of publication of application: 12.04.2023
(73) Proprietor: ZKW Group GmbH, 3250 Wieselburg (AT)
(72) Inventor: Kokoska, Anton, 02705 Zázrivá (SK); Bakus, Lukas, 97247 Oslany (SK); Kyselica, Jaroslav, 92703 Bánovce nad Bebravou (SK)
(74) Representative: Patentanwaltskanzlei Matschnig & Forsthuber OG

(56) References cited:
- EP-A1- 0 580 496
- DE-A1- 3 149 831
- DE-C- 938 841
- DE-U1- 8 313 450
- US-A- 3 574 899
- US-A- 5 260 857
- US-A- 5 414 602
- US-A1- 2003 043 591

## Description

The invention relates to Adjusting system for adjusting, in particular pivoting, a light module of a vehicle headlamp around a first rotary axis, wherein the adjusting system comprises:
- a mounting body which is stationary in relation to the light module in an installed state of the adjusting system in the vehicle headlamp,
- an actuating element with a longitudinal axis, said actuating element being rotatable about its longitudinal axis and having a thread portion extending along the longitudinal axis,
- an adapter element for rotatably engaging with the actuating element, wherein the adapter element having a longitudinal axis and a counter-thread portion extending partially along the longitudinal axis of the adapter element, said counter-thread portion corresponding to the thread portion of the actuating element, wherein the actuating element is rotatably mounted on the adapter element by means of the counter-thread portion, wherein the engagement of the counter-thread portion with the thread portion of the actuating element causes that a rotational movement of the actuating element also includes a linear movement of the actuating element along its longitudinal axis in relation to the adapter element,

wherein the adapter element is mounted on the mounting body by means of a securing device configured to secure the adapter element on the mounting body,
and wherein the actuating element comprises a coupling element for mechanically engaging with the light module in order to transmit the linear movement of the actuating element into a pivoting movement of the light module around the first rotary axis.

The adapter element comprises at least one first engaging-element and an abutment element, wherein the mounting body comprises a mounting-opening with at least one recess corresponding to the at least one first engaging-element, and wherein the securing device comprises at least one first counter-engaging element, wherein the adapter element can be brought into an intermediate position on the mounting body by inserting the adapter element in an insertion direction into the mounting-opening of the mounting body, such that the at least one first engaging-element passes through the mounting opening including the at least one recess, and the abutment element abuts on a portion of the mounting body, which surrounds the mounting-opening, when reaching the intermediate position, thus limiting the inserting movement of the adapter element in the insertion direction into the mounting-opening, and wherein the adapter element can be brought into an end position on the mounting body by rotating the adapter element starting from the intermediate position around the longitudinal axis of the adapter element, such that the at least one first counter-engaging element together with the at least one first engaging element and the abutment element are positively locked to each other in such a way, that the adapter element is secured against a movement along the longitudinal axis of the adapter element, and wherein a pivoting movement of the light module around the first rotary axis caused by the actuating element causes a pivoting of the actuating element together with the adapter element about a pivot axis parallel to the first rotary axis.

To pivot a light module or other optically relevant components, adjusting systems of prior art are usually consist of several components in order to allow pivoting of a light module in an efficient and secure way. Also, the assembling of all parts of such an adjusting system is complex and takes a long assembly time.

Example of such an adjusting system is disclosed in US2003043591A1.

It is an object of the invention to provide an enhanced adjusting system.

To achieve this object, the abutment element
- has a taper radially outwardly from the longitudinal axis of the adapter element, and
- is preferably built elastically,
in such a way to allow pivoting of the adapter element and the actuating element around the pivot axis in an angular range of at least +/- 1 degree about a zero position of the actuating element, wherein the first engaging-element is built as latching element and the first counter-engaging element is built as a counter-latching element, wherein the latching element snaps into the counter-latching element, when the adapter element reaches the end position, wherein the latching element extends radially to the longitudinal axis of the adapter element.

The term "positively locked" is equal to the term "positively connected". Positively locked connections are created by interlocking of at least two connection partners. As a result, the connection partners cannot disengage even without or with interrupted force transmission. In other words, in a positively locked connection (or form-fit connection), one connection partner is in the way of the other.

Advantageously, the portion of the mounting body, which surrounds the mounting-opening is built as the first counter-engaging element, wherein the first counter-engaging element together with the first engaging-element and the abutment element are positively locked to each other in such a way, that the portion of the mounting body, which surrounds the mounting-opening is interjacent between the first engaging element and the abutment element.

Advantageously, the at least one first engaging-element of the adapter element is built as a protrusion, which extends radially to the longitudinal axis of the adapter element.

Advantageously, the coupling element of the actuating element is built as a ball, wherein the mechanical engagement between the coupling element and the light module is built as a ball joint.

Advantageously, the actuating element comprises a stopper element configured to abut on the abutment element of the adapter element, when a predetermined minimal stroke of the actuating element in the adapter element is reached, in order to limit the movement of the actuating element along the insertion direction.

In other words, when the stopper element abuts on the abutment element, the actuating element is fully screwed into the adapter element, which causes the maximum tilt or pivoting of the light module around the first rotary axis, so that - in a correctly installed position of the adjusting system in a vehicle headlamp - the light module is maximal pivoted upwards.

Advantageously, the adapter element is built as one integral piece.

The object is also achieved by an illumination device comprising at least one adjusting system according to the invention and a light module.

Advantageously, the light module can be pivoted around the first rotary axis by the adjusting system in an angular range of at least +/- 1 degree about a zero position of the light module.

Advantageously, the actuating element is in a zero position when the light module is in a zero position.

The object is also achieved by a motor vehicle headlamp with at least one adjusting system and/or an illumination device according to the invention.

In the following, in order to further demonstrate the present invention, illustrative and non-restrictive embodiments are discussed, as shown in the drawings, which show:
Fig. 1 a perspective view of an exemplary adjusting system for a light module of a vehicle headlamp, wherein the adjusting system comprises an actuating element engaging with the light module, wherein the actuating element mechanically engages with an adapter element, which is mounted on a mounting body,
Fig. 2 a perspective view of the adapter element of Fig. 1, wherein the adapter element comprises a securing device with a first engaging element and an abutment element,
Fig. 3 another perspective view of the adapter element of Fig. 2 and Fig. 1, wherein the adapter element is in an end position on the mounting body,
Fig. 4 another perspective view of the adapter element of Fig. 1, 2 and 3,
Fig. 5 a side view of the adapter element in the end position on the mounting body, and
Fig. 6 a side view of the adapter element with the actuating element, wherein the actuating element is movable around a zero position of the actuating element indicated with dotted lines.

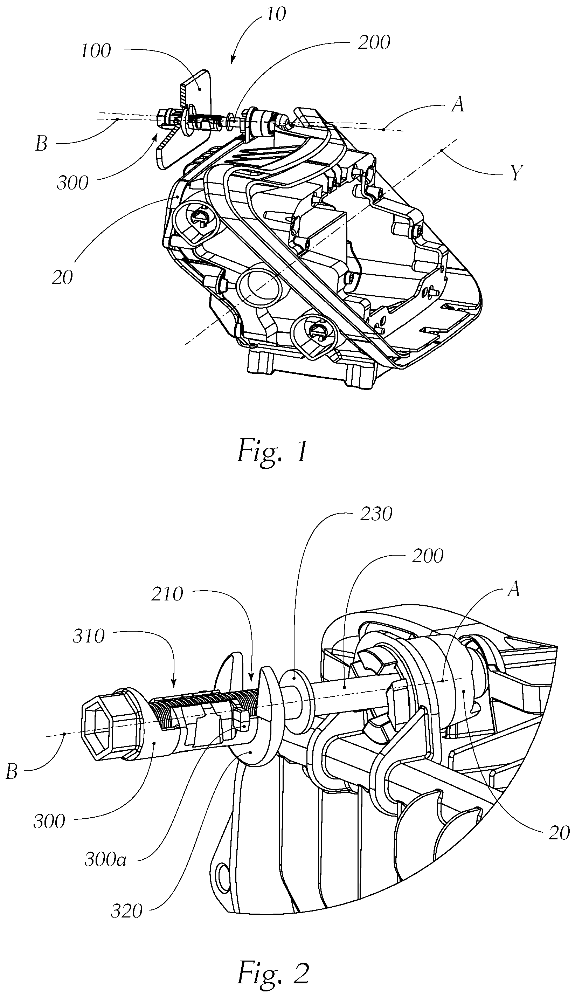

**Fig. 1** shows an adjusting system **10** for adjusting, in particular pivoting, a light module **20** of a vehicle headlamp around a first rotary axis **Y,** wherein the adjusting system **10** comprises a mounting body **100,** which is stationary in relation to the light module **20** in an installed state of the adjusting system **10** in the vehicle headlamp.

Further, the adjusting system **10** comprises an actuating element **200** with a longitudinal axis A, said actuating element **200** being rotatable about its longitudinal axis **A** and having a thread portion **210** extending along the longitudinal axis **A.**

Also, the adjusting system **10** comprises an adapter element **300** for rotatably engaging with the actuating element **200,** wherein the adapter element **300** having a longitudinal axis **B** and a counter-thread portion **310** extending partially along the longitudinal axis **B** of the adapter element **300,** said counter-thread portion **310** corresponding to the thread portion **210** of the actuating element **200,** wherein the actuating element **200** is rotatably mounted on the adapter element **300** by means of the counter-thread portion **310,** wherein the engagement of the counter-thread portion **310** with the thread portion **210** of the actuating element **200** causes that a rotational movement of the actuating element **200** also includes a linear movement of the actuating element **200** along its longitudinal axis **A** in relation to the adapter element **300.**

The adapter element **300** is mounted on the mounting body **100** by means of a securing device configured to secure the adapter element **300** on the mounting body **100.** Further, the adapter element **300** is built as one integral piece.

The actuating element **200** comprises a coupling element **220** for mechanically engaging with the light module **20** in order to transmit the linear movement of the actuating element **200** into a pivoting movement of the light module **20** around the first rotary axis **Y.**

The coupling element **220** of the actuating element **200** in the shown example is built as a ball, wherein the mechanical engagement between the coupling element and the light module **20** is built as a ball joint.

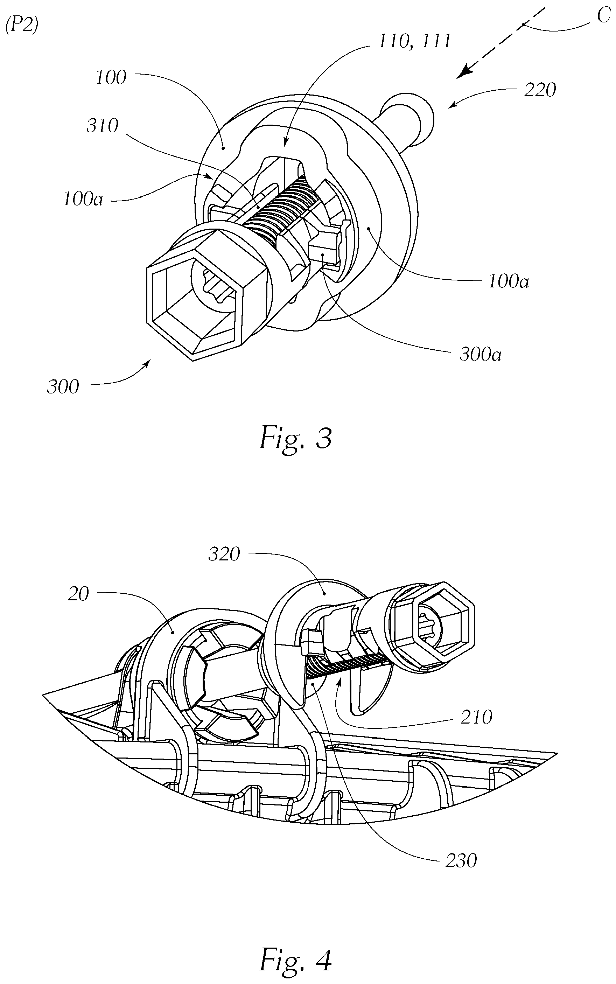

The adapter element **300** comprises at least one first engaging-element **300a** and an abutment element **320,** which can be seen for example in **Fig. 2** and **Fig. 4****.**

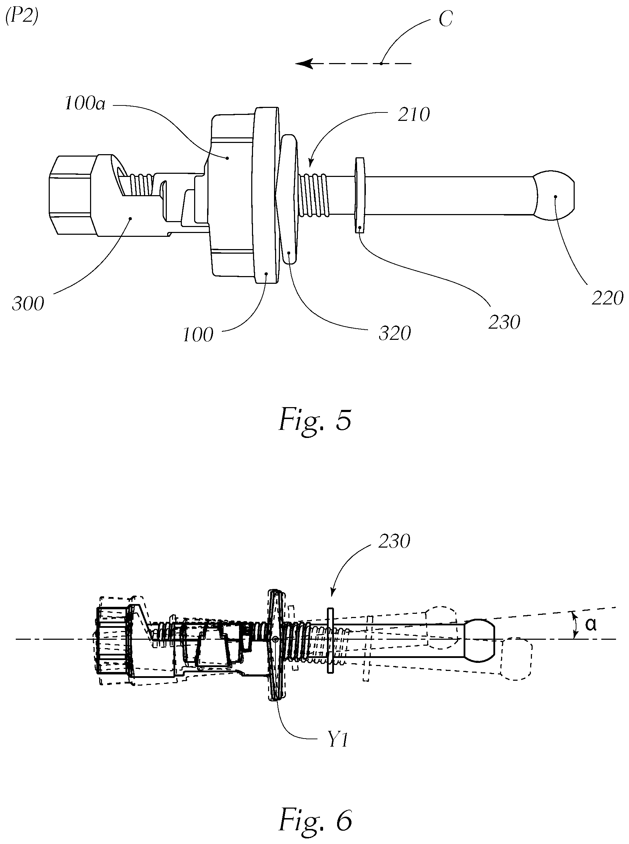

The mounting body **100** comprises a mounting-opening **110** with at least one recess **111** corresponding to the at least one first engaging-element **300a,** and wherein the securing device comprises at least one first counter-engaging element **100a,** wherein the adapter element **300** can be brought into an intermediate position on the mounting body **100** by inserting the adapter element **300** in an insertion direction C into the mounting-opening **110** of the mounting body **100,** such that the at least one first engaging-element **300a** passes through the mounting opening **110** including the at least one recess **111,** and the abutment element **320** abuts on a portion of the mounting body **100,** which surrounds the mounting-opening **110,** when reaching the intermediate position, thus limiting the inserting movement of the adapter element **300** in the insertion direction C into the mounting-opening **110,** as can be seen in **Fig. 3** and **Fig. 5****.**

The portion of the mounting body **100,** which surrounds the mounting-opening **110,** is hereby built as the first counter-engaging element **100a,** wherein the first counter-engaging element **100a** together with the first engaging-element **300a** and the abutment element **320** are positively locked to each other in such a way, that the portion of the mounting body **100,** which surrounds the mounting-opening **110,** is interjacent between the first engaging element **300a** and the abutment element **320.**

Further, the adapter element **300** can be brought into an end position **P2** on the mounting body **100** by rotating the adapter element **300** starting from the intermediate position around the longitudinal axis **B** of the adapter element **300,** such that the at least one first counter-engaging element **100a** together with the at least one first engaging-element **300a** and the abutment element **320** are positively locked to each other in such a way, that the adapter element **300** is secured against a movement along the longitudinal axis **B** of the adapter element **300.**

Moreover, the at least one first engaging-element **300a** of the adapter element **300** is built as a protrusion, which extends radially to the longitudinal axis **B** of the adapter element **300,** wherein the first engaging-element **300a** is also built as a latching element and the first counter-engaging element **100a** is built as a counter-latching element, wherein the latching element snaps into the counter-latching element, when the adapter element **300** reaches the end position **P2,** wherein the latching element extends radially to the longitudinal axis **B** of the adapter element **300.**

A pivoting movement of the light module **20** around the first rotary axis **Y** caused by the actuating element **200** causes a pivoting of the actuating element **200** together with the adapter element **300** about a pivot axis **Y1** parallel to the first rotary axis **Y,** wherein the abutment element **320** has a taper radially outwardly from the longitudinal axis **B** of the adapter element, and is built elastically, in such a way to allow pivoting of the adapter element **300** and the actuating element **200** around the pivot axis Y1 in an angular range of at least +/- 1 degree about a zero position of the actuating element **200,** which is indicated in dotted lines in **Fig. 6****.**

Further, as can be seen in **Fig. 5** and **Fig. 6****,** the actuating element **200** comprises a stopper element **230** configured to abut on the abutment element **320** of the adapter element **300,** when a predetermined minimal stroke of the actuating element **200** in the adapter element **300** is reached, in order to limit the movement of the actuating element **200** along the insertion direction **C.**

In other words, when the stopper element **230** abuts on the abutment element **320,** the actuating element **200** is fully screwed into the adapter element **300,** which causes the maximum tilt or pivoting of the light module **20** around the first rotary axis **Y,** so that - in a correctly installed position of the adjusting system **10** in a vehicle headlamp - the light module **20** is maximal pivoted upwards.

### LIST OF REFERENCE SIGNS

| | |
|---|---|
| Adjusting system... | 10 |
| Light module... | 20 |
| Mounting body... | 100 |
| First counter-engaging element... | 100a |
| Mounting-opening... | 110 |
| Recess... | 111 |
| Actuating element... | 200 |
| Thread portion... | 210 |
| Coupling element... | 220 |
| Stopper element... | 230 |
| Adapter element... | 300 |
| First engaging-element... | 300a |
| Counter-thread portion... | 310 |
| Abutment element... | 320 |
| Longitudinal axis (act. el.)... | A |
| Longitudinal axis (ad. el.)... | B |
| Insertion direction... | C |
| End position... | P2 |
| First rotary axis... | Y |
| Pivot axis... | Y1 |

## Claims

1. Adjusting system (10) for adjusting, in particular pivoting, a light module (20) of a vehicle headlamp around a first rotary axis (Y), wherein the adjusting system (10) comprises:
- a mounting body (100) which is stationary in relation to the light module (20) in an installed state of the adjusting system (10) in the vehicle headlamp,
- an actuating element (200) with a longitudinal axis (A), said actuating element (200) being rotatable about its longitudinal axis (A) and having a thread portion (210) extending along the longitudinal axis (A),
- an adapter element (300) for rotatably engaging with the actuating element (200), wherein the adapter element (300) having a longitudinal axis (B) and a counter-thread portion (310) extending partially along the longitudinal axis (B) of the adapter element (300), said counter-thread portion (310) corresponding to the thread portion (210) of the actuating element (200), wherein the actuating element (200) is rotatably mounted on the adapter element (300) by means of the counter-thread portion (310), wherein the engagement of the counter-thread portion (310) with the thread portion (210) of the actuating element (200) causes that a rotational movement of the actuating element (200) also includes a linear movement of the actuating element (200) along its longitudinal axis (A) in relation to the adapter element (300),
wherein the adapter element (300) is mounted on the mounting body (100) by means of a securing device configured to secure the adapter element (300) on the mounting body (100), and wherein the actuating element (200) comprises a coupling element (220) for mechanically engaging with the light module (20) in order to transmit the linear movement of the actuating element (200) into a pivoting movement of the light module (20) around the first rotary axis (Y),
wherein
the adapter element (300) comprises at least one first engaging-element (300a) and an abutment element (320),
wherein the mounting body (100) comprises a mounting-opening (110) with at least one recess (111) corresponding to the at least one first engaging-element (300a), and wherein the securing device comprises at least one first counter-engaging element (100a),
wherein the adapter element (300) can be brought into an intermediate position on the mounting body (100) by inserting the adapter element (300) in an insertion direction (C) into the mounting-opening (110) of the mounting body (100), such that the at least one first engaging-element (300a) passes through the mounting opening (110) including the at least one recess (111), and the abutment element (320) abuts on a portion of the mounting body (100), which surrounds the mounting-opening (110), when reaching the intermediate position, thus limiting the inserting movement of the adapter element (300) in the insertion direction (C) into the mounting-opening (110),
and wherein the adapter element (300) can be brought into an end position (P2) on the mounting body (100) by rotating the adapter element (300) starting from the intermediate position around the longitudinal axis (B) of the adapter element (300), such that the at least one first counter-engaging element (100a) together with the at least one first engaging-element (300a) and the abutment element (320) are positively locked to each other in such a way, that the adapter element (300) is secured against a movement along the longitudinal axis (B) of the adapter element (300),
and wherein a pivoting movement of the light module (20) around the first rotary axis (Y) caused by the actuating element (200) causes a pivoting of the actuating element (200) together with the adapter element (300) about a pivot axis (Y1) parallel to the first rotary axis (Y), **characterized in that** the abutment element (320)
- has a taper radially outwardly from the longitudinal axis (B) of the adapter element, and
- is preferably built elastically,
in such a way to allow pivoting of the adapter element (300) and the actuating element (200) around the pivot axis (Y1) in an angular range of at least +/- 1 degree about a zero position of the actuating element (200),
wherein the first engaging-element (300a) is built as latching element and the first counter-engaging element (100a) is built as a counter-latching element, wherein the latching element snaps into the counter-latching element, when the adapter element (300) reaches the end position (P2), wherein the latching element extends radially to the longitudinal axis (B) of the adapter element (300).

2. Adjusting system according to claim 1, **wherein** the portion of the mounting body (100), which surrounds the mounting-opening (110) is built as the first counter-engaging element (100a), wherein the first counter-engaging element (100a) together with the first engaging-element (300a) and the abutment element (320) are positively locked to each other in such a way, that the portion of the mounting body (100), which surrounds the mounting-opening (110) is interjacent between the first engaging element (300a) and the abutment element (320).

3. Adjusting system according to claim 1 or 2, **wherein** the at least one first engaging-element (300a) of the adapter element (300) is built as a protrusion, which extends radially to the longitudinal axis (B) of the adapter element (300).

4. Adjusting system according to any one of the claims 1 to 3, **wherein** the coupling element (220) of the actuating element (200) is built as a ball, wherein the mechanical engagement between the coupling element and the light module (20) is built as a ball joint.

5. Adjusting system according to any one of the claims 1 to 4, **wherein** the actuating element (200) comprises a stopper element (230) configured to abut on the abutment element (320) of the adapter element (300), when a predetermined minimal stroke of the actuating element (200) in the adapter element (300) is reached, in order to limit the movement of the actuating element (200) along the insertion direction (C).

6. Adjusting system according to any one of the claims 1 to 5, **wherein** the adapter element (300) is built as one integral piece.

7. Illumination device comprising at least one adjusting system (10) according to any one of the claims 1 to 6 and a light module (20).

8. Illumination device according to claim 7, **wherein** the light module (20) can be pivoted around the first rotary axis (Y) by the adjusting system (10) in an angular range of at least +/-1 degree about a zero position of the light module (20).

9. Illumination device according to claim 8, **wherein** the actuating element (200) is in a zero position when the light module (20) is in a zero position.

10. Motor vehicle headlamp with at least one adjusting system (10) according to any one of the claims 1 to 6 and/or an illumination device according to any one of the claims 7 to 9.

## Patentansprüche

1. Verstellsystem (10) zum Verstellen, insbesondere Schwenken, eines Lichtmoduls (20) eines Fahrzeugscheinwerfers um eine erste Drehachse (Y), wobei das Verstellsystem (10) umfasst:
- einen Montagekörper (100), der in einem Einbauzustand des Verstellsystems (10) in den Fahrzeugscheinwerfer ortsfest in Bezug auf das Lichtmodul (20) ist,
- ein Betätigungselement (200) mit einer Längsachse (A), wobei das Betätigungselement (200) um seine Längsachse (A) drehbar ist und einen Gewindeabschnitt (210) aufweist, der sich entlang der Längsachse (A) erstreckt,
- ein Adapterelement (300) zum drehbaren Eingriff mit dem Betätigungselement (200), wobei das Adapterelement (300) eine Längsachse (B) und einen Gegengewindeabschnitt (310) aufweist, der sich teilweise entlang der Längsachse (B) des Adapterelements (300) erstreckt, wobei der Gegengewindeabschnitt (310) dem Gewindeabschnitt (210) des Betätigungselements (200) korrespondiert, wobei das Betätigungselement (200) mittels des Gegengewindeabschnitts (310) drehbar an dem Adapterelement (300) angebracht ist, wobei der Eingriff des Gegengewindeabschnitts (310) mit dem Gewindeabschnitt (210) des Betätigungselements (200) bewirkt, dass eine Drehbewegung des Betätigungselements (200) auch eine lineare Bewegung des Betätigungselements (200) entlang seiner Längsachse (A) in Bezug auf das Adapterelement (300) umfasst,
wobei das Adapterelement (300) an dem Montagekörper (100) mittels einer Befestigungsvorrichtung montiert ist, die eingerichtet ist, um das Adapterelement (300) an dem Montagekörper (100) zu sichern,
und wobei das Betätigungselement (200) ein Kopplungselement (220) zum mechanischen Eingriff mit dem Lichtmodul (20) aufweist, um die lineare Bewegung des Betätigungselements (200) in eine Schwenkbewegung des Lichtmoduls (20) um die erste Drehachse (Y) zu übertragen, wobei
das Adapterelement (300) mindestens ein erstes Eingriffselement (300a) und ein Anschlagelement (320) aufweist,
wobei der Montagekörper (100) eine Montageöffnung (110) mit mindestens einer mit dem mindestens einen ersten Eingriffselement (300a) korrespondierenden Ausnehmung (111) aufweist, und wobei die Sicherungseinrichtung mindestens ein erstes Gegeneingriffselement (100a) aufweist,
wobei das Adapterelement (300) durch Einschieben des Adapterelements (300) in einer Einschubrichtung (C) in die Montageöffnung (110) des Montagekörpers (100) in eine Zwischenposition am Montagekörper (100) gebracht werden kann, so dass das mindestens eine erste Eingriffselement (300a) durch die Montageöffnung (110) einschließlich der mindestens einen Ausnehmung (111) hindurchtritt, und das Anschlagelement (320) beim Erreichen der Zwischenposition an einem die Montageöffnung (110) umgebenden Abschnitt des Montagekörpers (100) anschlägt, wodurch die Einschubbewegung des Adapterelements (300) in der Einschubrichtung (C) in die Montageöffnung (110) begrenzt wird,
und wobei das Adapterelement (300) durch Drehen des Adapterelements (300) ausgehend von der Zwischenposition um die Längsachse (B) des Adapterelements (300) in eine Endposition (P2) am Montagekörper (100) gebracht werden kann, so dass das mindestens eine erste Gegeneingriffselement (100a) zusammen mit dem mindestens einen ersten Eingriffselement (300a) und dem Anschlagelement (320) derart formschlüssig miteinander verbunden sind, dass das Adapterelement (300) gegen eine Bewegung entlang der Längsachse (B) des Adapterelements (300) gesichert ist,
und wobei eine durch das Betätigungselement (200) verursachte Schwenkbewegung des Lichtmoduls (20) um die erste Drehachse (Y) ein Schwenken des Betätigungselements (200) zusammen mit dem Adapterelement (300) um eine zur ersten Drehachse (Y) parallele Schwenkachse (Y1) bewirkt, **dadurch gekennzeichnet, dass** das Anschlagelement (320)
- eine Verjüngung radial nach außen von der Längsachse (B) des Adapterelements aufweist, und
- vorzugsweise elastisch ausgebildet ist,
derart, dass ein Schwenken des Adapterelements (300) und des Betätigungselements (200) um die Schwenkachse (Y1) in einem Winkelbereich von mindestens +/- 1 Grad um eine Nullstellung des Betätigungselements (200) möglich ist,
wobei das erste Eingriffselement (300a) als Rastelement und das erste Gegeneingriffselement (100a) als Gegenrastelement ausgebildet ist, wobei das Rastelement in das Gegenrastelement einrastet, wenn das Adapterelement (300) die Endposition (P2) erreicht, wobei sich das Rastelement radial zur Längsachse (B) des Adapterelements (300) erstreckt.

2. Verstellsystem nach Anspruch 1, wobei der Teil des Montagekörpers (100), der die Montageöffnung (110) umgibt, als erstes Gegenrastelement (100a) ausgebildet ist, wobei das erste Gegeneingriffselement (100a) zusammen mit dem ersten Eingriffselement (300a) und dem Anschlagelement (320) derart formschlüssig miteinander verbunden sind, dass der die Montageöffnung (110) umgebende Teil des Montagekörpers (100) zwischen dem ersten Eingriffselement (300a) und dem Anschlagelement (320) liegt.

3. Verstellsystem nach Anspruch 1 oder 2, wobei das mindestens eine erste Eingriffselement (300a) des Adapterelements (300) als ein Vorsprung ausgebildet ist, der sich radial zur Längsachse (B) des Adapterelements (300) erstreckt.

4. Verstellsystem nach einem der Ansprüche 1 bis 3, wobei das Kupplungselement (220) des Betätigungselements (200) als Kugel ausgebildet ist, wobei der mechanische Eingriff zwischen dem Kupplungselement und dem Lichtmodul (20) als Kugelgelenk ausgebildet ist.

5. Verstellsystem nach einem der Ansprüche 1 bis 4, wobei das Betätigungselement (200) ein Anschlagelement (230) aufweist, das so konfiguriert ist, dass es an dem Anschlagelement (320) des Adapterelements (300) anschlägt, wenn ein vorbestimmter minimaler Hub des Betätigungselements (200) in dem Adapterelement (300) erreicht ist, um die Bewegung des Betätigungselements (200) entlang der Einschubrichtung (C) zu begrenzen.

6. Verstellsystem nach einem der Ansprüche 1 bis 5, wobei das Adapterelement (300) einteilig ausgebildet ist.

7. Beleuchtungsvorrichtung, umfassend mindestens ein Verstellsystem (10) nach einem der Ansprüche 1 bis 6 und ein Lichtmodul (20).

8. Beleuchtungsvorrichtung nach Anspruch 7, wobei das Lichtmodul (20) durch das Verstellsystem (10) in einem Winkelbereich von mindestens +/- 1 Grad um eine Nullstellung des Lichtmoduls (20) um die erste Drehachse (Y) schwenkbar ist.

9. Beleuchtungsvorrichtung nach Anspruch 8, wobei sich das Betätigungselement (200) in einer Nullstellung befindet, wenn sich das Lichtmodul (20) in einer Nullstellung befindet.

10. Kraftfahrzeugscheinwerfer mit mindestens einem Einstellsystem (10) nach einem der Ansprüche 1 bis 6 und/oder einer Beleuchtungsvorrichtung nach einem der Ansprüche 7 bis 9.

## Revendications

1. Système de réglage (10) pour le réglage, en particulier le pivotement, d'un module d'éclairage (20) d'un projecteur de véhicule autour d'un premier axe de rotation (Y), dans lequel le système de réglage (10) comprend :
- un corps de montage (100) qui est fixe par rapport au module d'éclairage (20) lorsque le système de réglage (10) est installé dans le projecteur du véhicule,
- un élément d'actionnement (200) avec un axe longitudinal (A), ledit élément d'actionnement (200) étant rotatif autour de son axe longitudinal (A) et ayant une partie filetée (210) s'étendant le long de l'axe longitudinal (A),
- un élément adaptateur (300) pour s'engager de manière rotative avec l'élément d'actionnement (200), l'élément adaptateur (300) ayant un axe longitudinal (B) et une partie contre-filetée (310) s'étendant partiellement le long de l'axe longitudinal (B) de l'élément adaptateur (300), ladite partie contre-filetée (310) correspondant à la partie filetée (210) de l'élément d'actionnement (200), l'élément d'actionnement (200) est monté rotatif sur l'élément d'adaptation (300) au moyen de la partie contre-filetée (310), l'engagement de la partie contre-filetée (310) avec la partie filetée (210) de l'élément d'actionnement (200) faisant en sorte qu'un mouvement rotatif de l'élément d'actionnement (200) comprenne également un mouvement linéaire de l'élément d'actionnement (200) le long de son axe longitudinal (A) par rapport à l'élément d'adaptation (300),
l'élément adaptateur (300) est monté sur le corps de montage (100) au moyen d'un dispositif de fixation configuré pour fixer l'élément adaptateur (300) sur le corps de montage (100),
et dans lequel l'élément d'actionnement (200) comprend un élément de couplage (220) pour s'engager mécaniquement avec le module d'éclairage (20) afin de transmettre le mouvement linéaire de l'élément d'actionnement (200) en un mouvement de pivotement du module d'éclairage (20) autour du premier axe de rotation (Y),
dans lequel
l'élément adaptateur (300) comprend au moins un premier élément d'engagement (300a) et un élément de butée (320),
dans lequel le corps de montage (100) comprend une ouverture de montage (110) avec au moins une cavité (111) correspondant à l'au moins un premier élément d'engagement (300a), et dans lequel le dispositif de fixation comprend au moins un premier élément de contre-engagement (100a),
dans lequel l'élément adaptateur (300) peut être amené dans une position intermédiaire sur le corps de montage (100) en insérant l'élément adaptateur (300) dans une direction d'insertion (C) dans l'ouverture de montage (110) du corps de montage (100), de sorte que l'au moins un premier élément d'engagement (300a) passe à travers l'ouverture de montage (110) comprenant l'au moins un renfoncement (111), et que l'élément de butée (320) bute sur une partie du corps de montage (100), qui entoure l'ouverture de montage (110), lorsqu'il atteint la position intermédiaire, limitant ainsi le mouvement d'insertion de l'élément adaptateur (300) dans la direction d'insertion (C) dans l'ouverture de montage (110),
et dans lequel l'élément adaptateur (300) peut être amené dans une position finale (P2) sur le corps de montage (100) en faisant tourner l'élément adaptateur (300) à partir de la position intermédiaire autour de l'axe longitudinal (B) de l'élément adaptateur (300), de sorte que l'au moins un premier élément de contre-engagement (100a), l'au moins un premier élément d'engagement (300a) et l'élément de butée (320) sont verrouillés positivement l'un contre l'autre de telle sorte que l'élément d'adaptateur (300) est protégé contre un mouvement le long de l'axe longitudinal (B) de l'élément d'adaptateur (300),
et dans lequel un mouvement de pivotement du module d'éclairage (20) autour du premier axe de rotation (Y) causé par l'élément d'actionnement (200) entraîne un pivotement de l'élément d'actionnement (200) avec l'élément adaptateur (300) autour d'un axe de pivotement (Y1) parallèle au premier axe de rotation (Y), **caractérisé par le fait que** l'élément de butée (320)
- présente une conicité radiale vers l'extérieur par rapport à l'axe longitudinal (B) de l'élément adaptateur,
et
- est de préférence construit de manière élastique,
de manière à permettre le pivotement de l'élément adaptateur (300) et de l'élément d'actionnement (200) autour de l'axe de pivotement (Y1) dans une plage angulaire d'au moins +/-1 degré autour d'une position zéro de l'élément d'actionnement (200),
le premier élément d'engagement (300a) est un élément de verrouillage et le premier élément de contre-engagement (100a) est un élément de contre-engagement, l'élément de verrouillage s'enclenchant dans l'élément de contre-engagement lorsque l'élément adaptateur (300) atteint la position finale (P2), l'élément de verrouillage s'étendant radialement par rapport à l'axe longitudinal (B) de l'élément adaptateur (300).

2. Système de réglage selon la revendication 1, dans lequel la partie du corps de montage (100) qui entoure l'ouverture de montage (110) est construite comme le premier élément de contre-engagement (100a), dans lequel le premier élément de contre-engagement (100a), le premier élément d'engagement (300a) et l'élément de butée (320) sont verrouillés positivement l'un à l'autre de telle sorte que la partie du corps de montage (100) qui entoure l'ouverture de montage (110) est intercalée entre le premier élément d'engagement (300a) et l'élément de butée (320).

3. Système de réglage selon la revendication 1 ou 2, dans lequel l'au moins un premier élément d'engagement (300a) de l'élément adaptateur (300) est constitué d'une saillie qui s'étend radialement par rapport à l'axe longitudinal (B) de l'élément adaptateur (300).

4. Système de réglage selon l'une des revendications 1 à 3, dans lequel l'élément de couplage (220) de l'élément d'actionnement (200) est construit comme une boule, dans lequel l'engagement mécanique entre l'élément de couplage et le module d'éclairage (20) est construit comme une articulation sphérique.

5. Système de réglage selon l'une des revendications 1 à 4, dans lequel l'élément d'actionnement (200) comprend un élément d'arrêt (230) configuré pour s'appuyer sur l'élément d'appui (320) de l'élément adaptateur (300), lorsqu'une course minimale prédéterminée de l'élément d'actionnement (200) dans l'élément adaptateur (300) est atteinte, afin de limiter le mouvement de l'élément d'actionnement (200) le long de la direction d'insertion (C).

6. Système de réglage selon l'une quelconque des revendications 1 à 5, dans lequel l'élément adaptateur (300) est construit d'une seule pièce.

7. Dispositif d'éclairage comprenant au moins un système de réglage (10) selon l'une quelconque des revendications 1 à 6 et un module d'éclairage (20).

8. Dispositif d'éclairage selon la revendication 7, dans lequel le module d'éclairage (20) peut être pivoté autour du premier axe de rotation (Y) par le système de réglage (10) dans une plage angulaire d'au moins +/- 1 degré autour d'une position zéro du module d'éclairage (20).

9. Dispositif d'éclairage selon la revendication 8, dans lequel l'élément d'actionnement (200) est en position zéro lorsque le module d'éclairage (20) est en position zéro.

10. Projecteur de véhicule automobile avec au moins un système de réglage (10) selon l'une quelconque des revendications 1 à 6 et/ou un dispositif d'éclairage selon l'une quelconque des revendications 7 à 9.
